# EUROPÄISCHE PATENTANMELDUNG

(11) **EP 2 698 218 A1**
(43) Veröffentlichungstag der Anmeldung: **19.02.2014**
(21) Anmeldenummer: 12180862.0
(22) Anmeldetag: 17.08.2012
(51) Int. Cl.: B23B 29/24

(54) **Werkzeug, Schablone, Kassette und Verfahren zum Riffeln einer Walze**

(71) Anmelder: Bühler GmbH, 38114 Braunschweig (DE)
(72) Erfinder: Best, Heidrun, 38116 Braunschweig (DE); Santelmann, Karsten, 38518 Gifhorn (DE); Chrzan, Witold, 38259 Salzgitter (DE); Reupke, Björn, 38275 Steinlah (DE)
(74) Vertreter: Hepp Wenger Ryffel AG

(57) **Zusammenfassung**

Das erfindungsgemässe Werkzeug (1) umfasst einen Werkzeugkörper (3) und eine Kassette (4) zur spanenden Bearbeitung einer Walze. Zumindest eine Bearbeitungseinrichtung ist an und/oder in der Kassette (4) insbesondere lösbar befestigbar. Die Bearbeitungseinrichtung ist insbesondere eine Schneideinrichtung (14), bevorzugt zum Riffeln der Walze. Das Werkzeug (1) weist eine Positioniereinrichtung zur Ausrichtung der Kassette (4) im Werkzeugkörper (3) in einer vorbestimmten Position auf.

## Beschreibung

Die Erfindung betrifft ein Werkzeug, eine Schablone, eine Kassette zur insbesondere spanenden Bearbeitung eines Werkstücks sowie ein Verfahren zur Riffelung einer Walze gemäss dem Oberbegriff der unabhängigen Ansprüche.

Aus der WO 2008/064656 A1 ist ein spanendes Werkzeug mit einem Werkzeugträger und einer am Werkzeugträger angebrachten Kassette bekannt. Eine Schneidplatte ist an der Kassette angeordnet. Das Werkzeug weist ein Keilgetriebe als Justiermittel auf zum Justieren der Kassette bezogen auf eine Längsachse des Werkzeugträgers.

Dieser vorbekannte Stand der Technik weist den Nachteil auf, dass eine Ausrichtung, d. h. eine Winkelstellung, der Schneidplatte zum zu bearbeitenden Werkzeug einen jeweils hohen Aufwand beim Wechsel der Schneidplatte erfordert. Zudem ist nicht immer eine ausreichende Genauigkeit der Ausrichtung beispielsweise für eine Riffelung von Walzen erreichbar, was gegebenenfalls zu einer Überriffelung von bereits geschnittenen Riffeln führen kann. Somit kann das Werkzeug zum Schneiden meist lediglich in einer Bearbeitungsrichtung mit der ausreichenden Schneidgenauigkeit verwendet werden, was eine heute nicht mehr ausreichende Bearbeitungszeit des Werkstücks erlaubt.

Es ist daher eine Aufgabe der vorliegenden Erfindung, die Nachteile des Bekannten zu vermeiden, insbesondere also ein Werkzeug und ein Verfahren zur Walzenriffelung bereitzustellen, mit denen die erforderliche Genauigkeit der Ausrichtung eines Bearbeitungswerkzeugs einfach und zuverlässig erzielbar ist und eine effiziente und zeitsparende Bearbeitung des Werkstücks ermöglicht wird.

Diese Aufgaben werden durch ein Werkzeug sowie ein Verfahren gemäss den unabhängigen Ansprüchen gelöst.

Das erfindungsgemässe Werkzeug umfasst einen Werkzeugkörper und eine Kassette. Insbesondere ist das Werkzeug zur spanenden Bearbeitung eines Werkstücks geeignet, welches insbesondere eine Walze ist. Zumindest eine Bearbeitungseinrichtung ist an und/oder in der Kassette insbesondere lösbar befestigbar. Die Bearbeitungseinrichtung ist insbesondere eine Schneideinrichtung, bevorzugt zum Riffeln der Walze. Das Werkzeug weist eine Positioniereinrichtung zur Ausrichtung der Kassette im Werkzeugkörper in einer vorbestimmten Position auf.

Dies hat den Vorteil, dass die Ausrichtung der Kassette und damit der Bearbeitungseinrichtung, beispielsweise der Schneideinrichtung, zur Riffelung der Walze unabhängig vom Bediener vorbestimmt werden kann, wodurch eine höhere Genauigkeit der Ausrichtung der Bearbeitungseinrichtung erreicht werden kann. Zudem werden Bedienfehler minimiert. Beispielsweise kann ein Set von Kassetten mit unterschiedlich ausgerichteten Bearbeitungswerkzeugen bereitgestellt werden, die der Bediener lediglich entsprechend den Anforderungen auswählt. Somit wird zudem die Handhabung des Werkzeugs verbessert und erleichtert, da der Bediener keine Einstellung der Ausrichtung der Bearbeitungseinrichtung wie auch keine Einstellung der Position der Bearbeitungseinrichtung im Wesentlichen entlang der Längsachse der Bearbeitungseinrichtung vornehmen muss.

Die "Positioniereinrichtung zur Ausrichtung der Kassette" dient vorliegend der Positionierung der Kassette in einer vorbestimmten Winkelposition im Werkzeugkörper. Eine derartige Positioniereinrichtung dient insbesondere nicht der Positionierung der Bearbeitungseinrichtung entlang einer Längsachse der Kassette oder des Werkzeugs, d. h. insbesondere nicht der Justierung des Abstands einer vom Werkzeug abgewandten Schneidkante der Schneideinrichtung.

Bevorzugt umfasst die Positioniereinrichtung einen am Werkzeugkörper angeordneten Spalt. Dies hat den Vorteil, dass die Position des Spalts genau einstellbar oder eingestellt ist, in welcher ein entsprechendes Element der Kassette zur Ausrichtung der Kassette im Werkzeugkörper in diesen eingreifen kann.

Bevorzugt ist an der Kassette ein Vorsprung zum Eingreifen in den Spalt angeordnet. Dies hat den Vorteil, dass der Vorsprung in den Spalt zur Ausrichtung der Kassette im Werkzeugkörper eingreifen kann, wobei der Vorsprung einfach und zuverlässig herstellbar und an der Kassette anordenbar ist. Somit lässt sich eine hohe Genauigkeit der Ausrichtung der Kassette bei einfacher Handhabung der Positioniereinrichtung erreichen.

Besonders bevorzugt ist der Vorsprung lösbar mit der Kassette verbindbar. Dies hat den Vorteil, dass entsprechend den Anforderungen der Vorsprung mit der Kassette verbindbar ist, was die Anzahl notwendiger Kassetten reduziert und damit die Kosten verringert, da die beispielsweise für einen Produktionslauf notwendigen Kassetten mit Bearbeitungseinrichtung und Vorsprung jeweils vorbereitet werden können.

Alternativ ist es möglich, den Vorsprung fest mit der Kassette zu verbinden, beispielsweise durch Verschweissen oder Verlöten. Dies hat den Vorteil, dass die Handhabung weiter vereinfacht und Bedienfehler noch zuverlässiger vermieden werden.

Bevorzugt ist der Vorsprung an einer Schablone angeordnet, wobei die Schablone eine Schablonenöffnung zur Aufnahme der Kassette aufweist. Insbesondere ist zumindest abschnittsweise die äussere Form der Kassette im Wesentlichen komplementär zur Form der Schablonenöffnung. Insbesondere sind die Form der Schablonenöffnung und die äussere Form der Kassette derart ausgestaltet, dass die Schablone und die Kassette in einer bestimmten Winkelstellung zueinander angeordnet sind.

Dies hat den Vorteil, dass eine Kombination aus Schablone und Kassette flexibel einsetzbar ist. Zudem wird gegebenenfalls die Anzahl notwendiger Kassetten reduziert, was kostengünstig ist. Beispielsweise ist es möglich, dass Kassetten mit identischer Anordnung der Bearbeitungswerkzeuge montiert werden und jeweils nach Bedarf durch Kombination aus Schablone und Kassette die Ausrichtung der Kassette im Werkzeug durch Auswahl der Schablone bestimmt wird.

Bevorzugt ist am und/oder im Spalt eine Befestigungseinrichtung zur Befestigung des Vorsprungs im Spalt angeordnet. Insbesondere erfolgt die Befestigung mittels Reibschluss.

Dies hat den Vorteil einer einfach ausgestalteten und zuverlässig funktionierenden Art und Weise der Befestigung des Vorsprungs im Werkzeugskörpereingriff. Beispielsweise kann dies durch Schrauben, die auf gegenüberliegenden Seitenflächen des Vorsprungs eine Kraft ausüben, erreicht werden.

Bevorzugt ist am und/oder im Werkzeugkörper eine Kassettenbefestigung angeordnet. Insbesondere erfolgt die Kassettenbefestigung mittels Reibschluss. Dies hat den Vorteil der zuverlässigen Befestigung der Kassette im Werkzeugkörper, die einfach handhabbar ist.

Bevorzugt weist die Kassette einen Griff auf. Dies hat den Vorteil, dass die Handhabung der Kassette beispielsweise beim Einsetzen in den Werkzeugkörper oder Entnehmen aus dem Werkzeugkörper vereinfacht wird.

Bevorzugt umfasst die Bearbeitungseinrichtung zwei in Reihe angeordnete Schneideinrichtungen. Dies hat den Vorteil, dass in einem Bearbeitungsschritt, beispielsweise einer Bewegung der Schneideinrichtungen entlang einer Walzenachse einer Walze, eine effizientere Bearbeitung erreichbar ist, da in einem Arbeitsschritt mehr Material entfernbar ist. Zudem wird die Zuverlässigkeit der Bearbeitung durch die zwei in Reihe angeordneten Schneideinrichtungen erhöht.

Unter einer Anordnung der Schneideinrichtungen "in Reihe" wird im Sinne der vorliegenden Anmeldung verstanden, dass, bezogen auf die Bearbeitungsrichtung beispielsweise entlang einer Werkstückoberfläche, die Schneideinrichtungen im Wesentlichen die gleichen Bereiche des Werkzeugs nacheinander bearbeiten.

Besonders bevorzugt weist die der Bearbeitungsrichtung zugewandte Schneideinrichtung bezogen auf eine Längsachse des Werkzeugs einen ersten Abstand vom Werkzeugkörper kleiner als einen zweiten Abstand der der Bearbeitungsrichtung abgewandten Schneideinrichtung auf. Insbesondere weist eine Schneidkante der der Bearbeitungsrichtung zugewandten Schneideinrichtung einen kleineren Abstand vom Werkzeugkörper als die Schneidkante der der Bearbeitungsrichtung abgewandten Schneideinrichtung.

Insbesondere beträgt die Differenz der Abstände zwischen den in Reihe angeordneten Schneideinrichtungen 0.06 mm bis 0.1 mm und bevorzugt 0.08 bis 0.1 mm.

Dies hat den Vorteil, dass mit der der Bearbeitungsrichtung zugewandten Schneideinrichtung eine Nut oder ein Riffel einer ersten Tiefe schneidbar ist und mit der der Bearbeitungsrichtung abgewandten Schneideinrichtung die Nut oder der Riffel weiter vertieft werden kann in einem Arbeitsschritt. In der Praxis hat es sich gezeigt, dass üblicherweise mit einer Schneideinrichtung eine Tiefe eines Riffels von bis zu 0.1 mm erreichbar ist; durch Anordnung von zwei in Reihe angeordneten Schneideinrichtungen mit einer Höhendifferenz ist somit in einem Arbeitsschritt ein Riffel mit einer grösseren Tiefe von beispielsweise 0.2 mm erreichbar, was die Werkstückbearbeitung effizienter macht.

Unter einer "Längsachse des Werkzeugs" wird im Sinne der vorliegenden Anmeldung eine Achse im Wesentlichen parallel zur Längsachse der Schneideinrichtung verstanden.

Bevorzugt umfasst die Bearbeitungseinrichtung zumindest zwei im Wesentlichen parallel zueinander angeordnete Schneideinrichtungen. Insbesondere ist eine erste Schneideinrichtung für eine erste Bearbeitungsrichtung angeordnet und eine zweite Schneideinrichtung für eine der ersten Bearbeitungsrichtung im Wesentlichen entgegengesetzte Bearbeitungsrichtung.

Dies hat den Vorteil, dass die Werkstückbearbeitung mittels des Werkzeugs in einer Vorwärtsbewegung und einer Rückwärtsbewegung ermöglicht wird, was die Bearbeitung des Werkstücks effizienter macht, da auch die Rückwärtsbewegung im Gegensatz zum Stand der Technik nutzbar ist.

Unter einer Anordnung von Schneideinrichtungen "im Wesentlichen parallel" wird im Sinne der vorliegenden Anmeldung verstanden, dass die Schneideinrichtungen bezogen auf die Bearbeitungsrichtung seitlich zueinander versetzt sind und insbesondere die Schneidkanten der Schneideinrichtungen im Wesentlichen parallel zueinander verlaufen.

Bevorzugt umfasst die Bearbeitungseinrichtung zwei im Wesentlichen parallel zueinander angeordnete Serien von zumindest zwei in Reihe angeordneten Schneideinrichtungen, wobei insbesondere ein erstes Paar von Schneideinrichtungen für eine erste Bearbeitungsrichtung und ein zweites Paar von Schneideinrichtungen für eine der ersten Bearbeitungsrichtung im Wesentlichen entgegengesetzte Bearbeitungsrichtung angeordnet ist.

Ein weiterer Aspekt der vorliegenden Erfindung betrifft ein Werkzeug zur insbesondere spanenden Bearbeitung eines Werkstücks. Das Werkzeug ist insbesondere ein Werkzeug wie oben beschrieben. Das Werkstück ist insbesondere eine Walze. Das Werkzeug umfasst einen Werkzeugkörper zur Aufnahme von zwei im Wesentlichen parallel zueinander angeordneten Serien von zumindest zwei in Reihe angeordneten Schneideinrichtungen. Insbesondere ist ein erstes Paar von Schneideinrichtungen für eine erste Bearbeitungsrichtung angeordnet und ein zweites Paar von Schneideinrichtungen für eine der ersten Bearbeitungsrichtung im Wesentlichen entgegengesetzte Bearbeitungsrichtung.

Dies hat den Vorteil einer noch effizienteren Bearbeitung von Werkstücken, was kostengünstig ist, da beide Bearbeitungsrichtungen nutzbar sind und das Werkzeug nicht unnötig ohne Bearbeitungsfunktion erneut am Ausgangsort der Bearbeitung des Werkstücks positioniert werden muss und zudem pro Bearbeitungsrichtung mehr Material vom Werkstück abgetragen werden kann.

Ein zusätzlicher Aspekt der vorliegenden Erfindung betrifft eine Schablone für ein Werkzeug wie oben beschrieben. Die Schablone umfasst einen Vorsprung zum Eingreifen in einen Spalt eines Werkzeugkörpers. Die Schablone weist eine Schablonenöffnung auf zur Aufnahme einer Kassette. Insbesondere zumindest abschnittsweise ist die äussere Form der Kassette im Wesentlichen komplementär zur Form der Schablonenöffnung.

Ein weiterer Aspekt der vorliegenden Erfindung betrifft eine Kassette für ein Werkzeug wie oben beschrieben. Die Kassette umfasst zumindest eine Bearbeitungseinrichtung, die insbesondere als eine Schneideinrichtung ausgebildet ist. Die Bearbeitungseinrichtung ist an und/oder in der Kassette insbesondere lösbar aufnehmbar. An der Kassette ist ein Vorsprung anordenbar oder angeordnet zum Eingreifen in einen Spalt eines Werkzeugkörpers.

Ein zusätzlicher Aspekt der vorliegenden Erfindung betrifft ein Set umfassend zumindest eine Schablone wie oben beschrieben und zumindest eine Kassette wie oben beschrieben.

Ein weiterer Aspekt der vorliegenden Erfindung betrifft ein Verfahren zum Riffeln einer Walze mit einem Werkzeug. Insbesondere wird ein Werkzeug wie oben beschrieben verwendet. Das Werkzeug umfasst einen Werkzeugkörper und/oder eine Kassette zur Aufnahme von zwei im Wesentlichen parallel zueinander angeordneten Paaren von zumindest zwei in Reihe angeordneten Schneideinrichtungen. Ein erstes Paar von Schneideinrichtungen ist für eine erste Bearbeitungsrichtung angeordnet und ein zweites Paar von Schneideinrichtungen ist für eine der ersten Bearbeitungsrichtung im Wesentlichen entgegengesetzte Bearbeitungsrichtung angeordnet. Das Verfahren umfasst den Schritt des Positionierens des ersten Paares an der Walze. Anschliessend erfolgt ein Rotieren der Walze um die Walzenachse in einer ersten Drehrichtung b, insbesondere um einen Winkelabschnitt, und im Wesentlichen gleichzeitigem Bewegen des Werkzeugs. Insbesondere erfolgt das Bewegen des Werkzeugs mittels eines Linearantriebs. Das Werkzeug wird entlang der Walzenachse in der ersten Bearbeitungsrichtung zum Herstellen eines Riffels in der Walze bewegt. Insbesondere wird das Werkzeug während des Rotierens entlang der gesamten Walzenlänge t bewegt. Anschliessend erfolgt ein Positionieren des zweiten Paares im Riffel, der insbesondere in einem vorherigen Verfahrensschritt geschnitten wurde. Anschliessend erfolgt ein Rotieren der Walze um die Walzenachse in einer zweiten Drehrichtung b, insbesondere um einen negativen Winkelabschnitt, und im Wesentlichen gleichzeitigem Bewegen des Werkzeugs entlang der Walzenachse in der zweiten Bearbeitungsrichtung entlang des Riffels. Die zweite Bearbeitungsrichtung ist der ersten Bearbeitungsrichtung im Wesentlichen entgegengesetzt. Insbesondere erfolgt das Bewegen des Werkzeugs mittels des Linearantriebs. Insbesondere wird das Werkzeug während des Rotierens der Walze entlang der gesamten Walzenlänge bewegt.

Dies hat den Vorteil der effizienten und zuverlässigen Herstellung von Riffeln auf einer Walze.

Unter einem "Rotieren um einen negativen Winkelabschnitt" wird vorliegend ein Rotieren über den in einem vorherigen Schritt überstrichenen Winkelabschnitt in entgegengesetzter Richtung verstanden.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Perspektivische Darstellung eines erfindungsgemässen Werkzeugs mit Kassette und Schneideinrichtungen;
- Figur 2:: perspektivische Darstellung einer erfindungsgemässen Kassette, wie diese im Werkzeug gemäss Figur 1 aufgenommen ist,
- Figur 3:: Draufsicht auf eine erfindungsgemässe Schablone zur Ausrichtung der Kassette gemäss Figur 2;
- Figur 4:: perspektivische Darstellung eines erfindungsgemässen Werkzeugkörpers wie in Figur 1 dargestellt;
- Figur 5:: perspektivische Darstellung der erfindungsgemässen Kassette gemäss Figur 2 ohne Mantel und Boden;
- Figur 6:: perspektivische Darstellung von vier Schneideinrichtungen für das erfindungsgemässe Werkzeug gemäss Figur 1;
- Figur 7:: schematische Darstellung in einer Vorderansicht eines alternativen erfindungsgemässen Werkzeugs und einer Walze für eine erste Bearbeitungsrichtung;
- Figur 8:: schematische Darstellung der Vorderansicht gemäss Figur 7 des erfindungsgemässen Werkzeugs und der Walze für eine zweite Bearbeitungsrichtung;
- Figur 9:: schematische Darstellung einer Seitenansicht eines erfindungsgemässen Werkzeugs mit zwei Schneideinrichtungen;
- Figur 10:: vergrösserte schematische Darstellung des erfindungsgemässen Werkzeugs gemäss Figur 9
- Figur 11:: perspektivische Darstellung des Mantels der Kassette gemäss Figur 2.

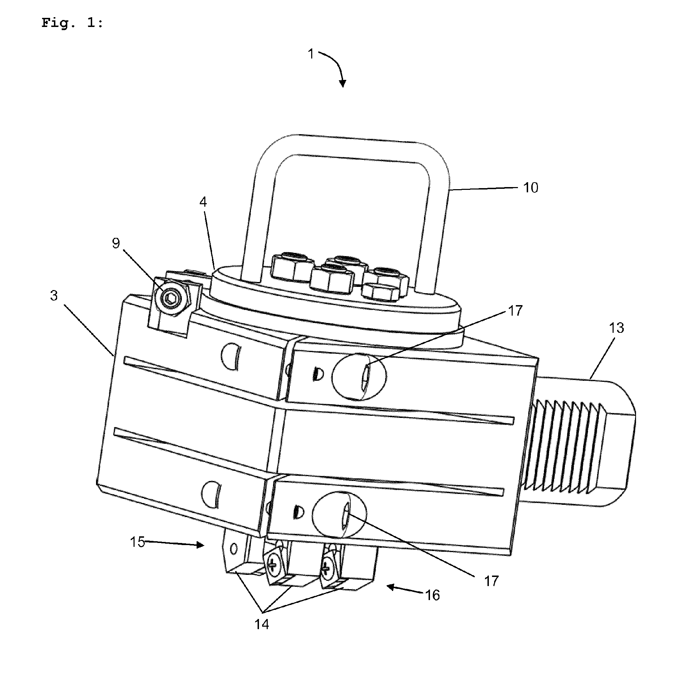

In Figur 1 ist in perspektivischer Darstellung ein erfindungsgemässes Werkzeug 1 dargestellt. Das Werkzeug 1 weist einen Werkzeugkörper 3 zur Aufnahme einer Kassette 4 auf. Der Werkzeugkörper 3 umfasst eine Befestigungseinrichtung 9 zur Befestigung eines hier nicht sichtbaren Vorsprungs der Kassette 4 zur Ausrichtung der Kassette 4 im Werkzeugkörper 3.

Der Werkzeugkörper 3 umfasst eine Kassettenbefestigung 17 zur sicheren Montage der Kassette 4 im Werkzeugkörper 3. Zudem weist der Werkzeugkörper 3 einen Werkzeughalter 13 umfassend einen Haltearm auf zur Aufnahme in einem Werkzeugträger, der beispielsweise mit einem Linearantrieb wirkverbunden ist zum Positionieren und Bearbeiten eines Werkstücks mit dem Werkzeugs 1. Der Werkzeughalter 13 ist als dem Fachmann bekannter Typ VDI 50 ausgebildet.

Die Kassette 4 umfasst einen Griff 10 zur einfachen Handhabung der Kassette 4.

Die Kassette 4 umfasst als Bearbeitungseinrichtung vier Schneideinrichtungen 14, von denen lediglich drei hier sichtbar sind. Somit sind in der Kassette 4 ein erstes Paar 15 von Schneideinrichtungen 14 und ein zweites Paar 16 von Schneideinrichtungen 14 angeordnet. Das erste Paar 15 ist dabei für eine erste Bearbeitungsrichtung im Wesentlichen parallel zu einer Längsachse des Haltearms des Werkzeughalters 13 und das zweite Paar 16 für eine entgegengesetzte Bearbeitungsrichtung angeordnet.

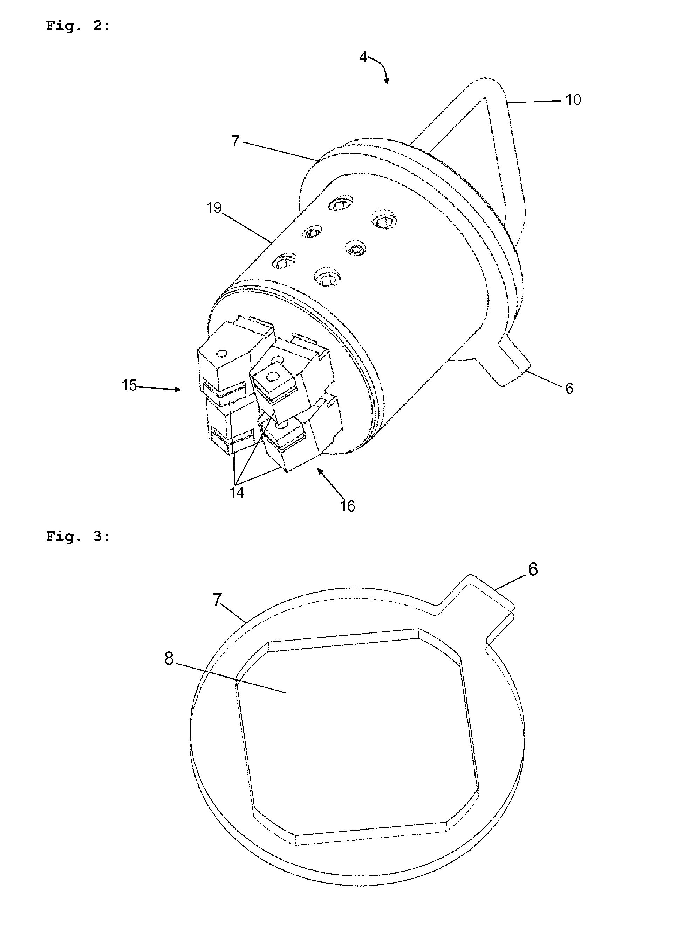

In Figur 2 ist in perspektivischer Darstellung eine Kassette 4 gemäss Figur 1 dargestellt.

Gleiche Referenzzeichen bezeichnen gleiche Merkmale in allen Figuren und werden deshalb nur bei Bedarf erneut erläutert.

An der Kassette 4 umfassend den Mantel 19 ist eine Schablone 7 mit einem Vorsprung 6 angeordnet, die in eine komplementäre Aussparung bzw. einen Spalt eingreifen kann zur Ausrichtung der Kassette im Werkzeugkörper. Die Schablone 7 ist lösbar mit der Kassette 4 verbunden.

In Figur 3 ist in einer Draufsicht eine Schablone 7 mit Vorsprung 6 gemäss Figur 2 dargestellt. Die Schablone 7 weist eine Schablonenöffnung 8 auf, in die die Kassette eingreifen kann. Zumindest abschnittsweise ist die äussere Form der Kassette im Wesentlichen komplementär zur Form der Schablonenöffnung 8, so dass die Kassette in der Schablonenöffnung 8 eine definierte Ausrichtung einnimmt.

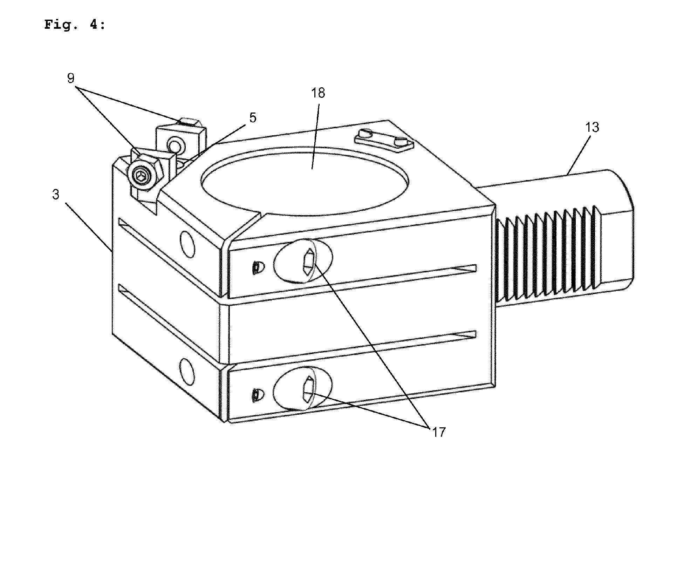

In Figur 4 ist in perspektivischer Darstellung der Werkzeugkörper 3 gemäss Figur 1 dargestellt.

Der Werkzeugkörper 3 weist einen Spalt 5 für den an der Kassette angeordneten Vorsprung auf, so dass die Kassette eine vorbestimmte Ausrichtung in dem Werkzeugkörper 3 einnimmt. Zur Aufnahme einer Kassette weist der Werkzeugkörper 3 eine Kassettenaufnahme 18 auf.

Am Spalt 5 ist eine Befestigungseinrichtung 9 angeordnet, die hier als zwei sich gegenüberliegende Schrauben ausgebildet ist. Im eingegriffenen Zustand des Vorsprungs im Spalt 5 sind die Schrauben so einstellbar, dass eine Kraft auf gegenüberliegende Flächen des Vorsprungs ausübbar ist zur Befestigung des Vorsprungs im Spalt 5 insbesondere mittels Reibschluss.

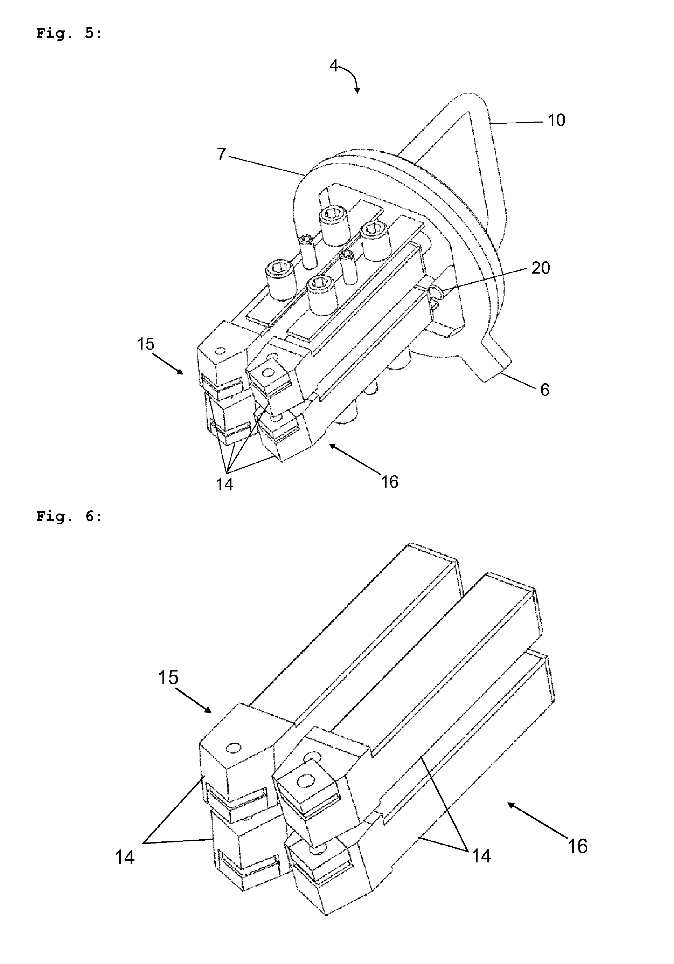

In Figur 5 ist die Kassette 4 gemäss Figur 2 dargestellt. In der vorliegenden Darstellung wurden der Mantel und der Boden der Kassette 4 zur Sichtbarmachung der Anordnung der Schneideinrichtungen 14 in der Kassette 4 weggelassen. Die Kassette 4 umfasst eine als Schrauben ausgebildete Einrichtung 20 zur Befestigung und Ausrichtung des Mantels, wobei lediglich eine von zwei Schrauben sichtbar ist.

In Figur 6 sind in perspektivischer Darstellung die vier Schneideinrichtungen 14 dargestellt, wie diese in der Kassette gemäss Figur 2 angeordnet sind. Zur besseren Sichtbarmachung dieser Anordnung wurden alle weiteren Teile der Kassette in der vorliegenden Darstellung entfernt.

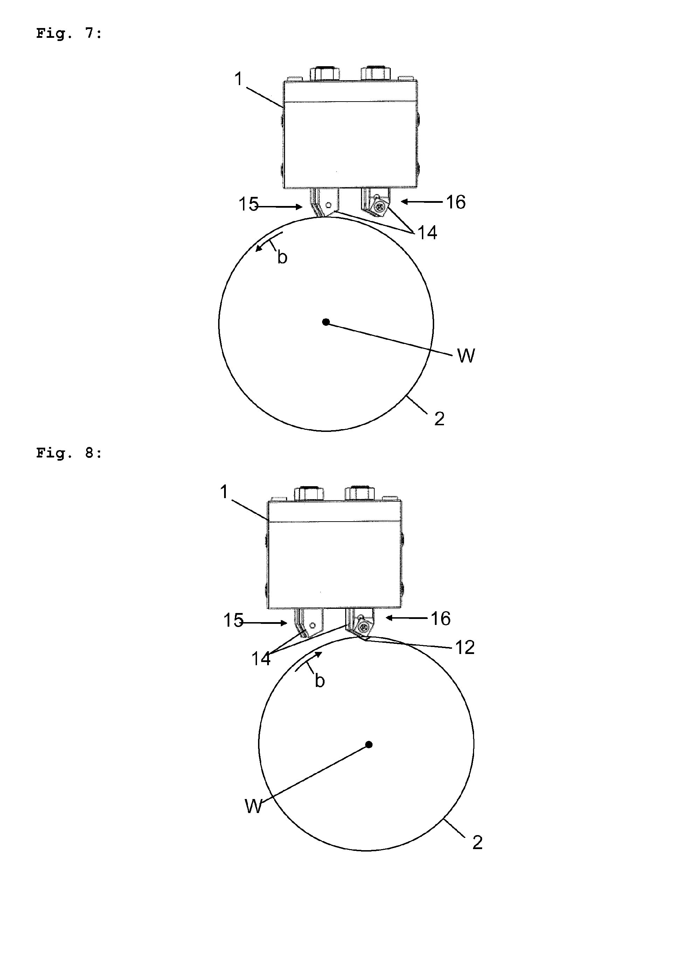

In Figur 7 ist in einer schematischen Darstellung in einer Vorderansicht ein alternatives erfindungsgemässes Werkzeug 1 gezeigt, welches an einer Walze 2 positioniert ist.

Das Werkzeug 1 umfasst ein erstes Paar 15 und ein zweites Paar 16 von Schneideinrichtungen 14 auf. Die Schneideinrichtungen 14 des ersten Paares sind in Reihe angeordnet. Die Schneideinrichtungen 14 des zweiten Paares 16 sind ebenfalls in Reihe angeordnet, wobei das erste Paar 15 und das zweite Paar 16 im Wesentlichen parallel zueinander angeordnet sind. Das erste Paar 15 ist für eine erste Bearbeitungsrichtung angeordnet und das zweite Paar 16 für eine der ersten Bearbeitungsrichtung im Wesentlichen entgegengesetzte Bearbeitungsrichtung.

Die Walze 2 ist im unbearbeiteten Zustand dargestellt. Für die Bearbeitung wird die Walze 2 um die Walzenachse W in einer ersten Drehrichtung b rotiert. Gleichzeitig wird das Werkzeug 1 mittels eines hier nicht gezeigten Antriebs parallel zur durch die Rotation der Walze 2 entlang des Sektors b mathematisch definierten Rotationsrichtung bewegt, d.h. aus der Zeichenebene auf den Beobachter zu.

In Figur 8 ist die Anordnung aus Werkzeug und Walze gemäss Figur 7 gezeigt nach dem ersten Bearbeitungsschritt und Positionieren des zweiten Paares 16 der Schneideinrichtungen 14 in einem Riffel 12. Dieser Riffel 12 wurde in dem in Figur 7 dargestellten Bearbeitungsschritt in der Walze 2 erzeugt.

Für die weitere Bearbeitung des Riffels 12 wird die Walze 2 in einer zweiten Drehrichtung b um einen negativen Winkelabschnitt rotiert, der eine Rotationsrichtung im mathematischen Sinne in die Zeichenebene hinein definiert. Im Wesentlichen gleichzeitig wird das Werkzeug 1 parallel zur Rotationsrichtung entlang des Riffels 12 beispielsweise zur weiteren Vertiefung des Riffels 12 bewegt.

Anschliessend kann der Prozess so oft wiederholt werden, bis die entsprechende Geometrie des Riffels 12 erreicht ist oder auch die Walze 2 eine Riffelung auf der ganzen Walzenoberfläche aufweist.

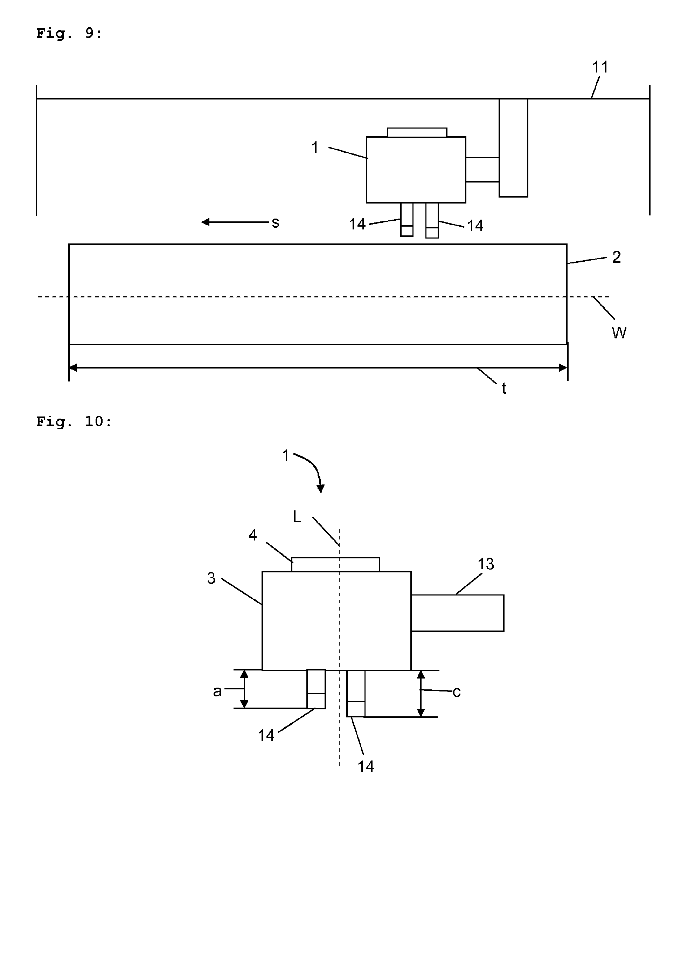

In Figur 9 ist in einer Seitenansicht schematisch ein erfindungsgemässes Werkzeug 1 mit zwei Schneideinrichtungen 14 dargestellt. Die Schneideinrichtungen 14 sind in Reihe zueinander angeordnet.

Das Werkzeug 1 ist an einem Linearantrieb 11 befestigt zur Bewegung des Werkzeugs 1 entlang der Bearbeitungsrichtung s. Die Schneideinrichtungen 14 sind so ausgestaltet, dass nur eine Bearbeitung in der Bearbeitungsrichtung s und nicht in der Gegenrichtung erfolgt.

Die Walze 2 mit der Walzenachse W weist eine Walzenlänge t von 1600 mm, die die maximale Walzenlänge t ist, auf.

Für die Bearbeitung der Walze 2 mit dem Werkzeug 1 wird das Werkzeug 1 an der Walze 2 positioniert und entlang der Bearbeitungsrichtung s mittels des Linearantriebs 11 bewegt. Während der Bewegung des Werkzeugs 1 wird die Walze 2 um die Walzenachse W um einen Winkelabschnitt rotiert.

Während der Rückbewegung entgegen der Bearbeitungsrichtung s nach der Bearbeitung der Walze 2 wird die Walze 2 gegebenenfalls um einen negativen Winkelabschnitt rotiert, um den vorher bearbeiteten Abschnitt der Walze 2 erneut zu bearbeiten.

Die der Bearbeitungsrichtung zugewandte Schneideinrichtung 14 weist einen kleineren Abstand vom Werkzeugkörper des Werkzeugs 1 auf als die der Bearbeitungsrichtung s abgewandte Schneideinrichtung 14.

In Figur 10 ist das Werkzeug 1 gemäss Figur 9 in einer vergrösserten Abbildung schematisch dargestellt. Das Werkzeug 1 umfasst den Werkzeugkörper 3 und die Kassette 4, welche die lediglich zwei in Reihe angeordneten Schneideinrichtungen umfasst. Entlang einer Längsachse L des Werkzeugs 1 weist die der Bearbeitungsrichtung zugewandte Schneideinrichtung 14 einen ersten Abstand a vom Werkzeugkörper auf und die der Bearbeitungsrichtung abgewandte Schneideinrichtung einen zweiten Abstand c. Der zweite Abstand c ist grösser als der erste Abstand a. Die Differenz zwischen dem zweiten Abstand c und dem ersten Abstand a beträgt 0.1 mm, wobei der Unterschied hier stark vergrössert dargestellt ist.

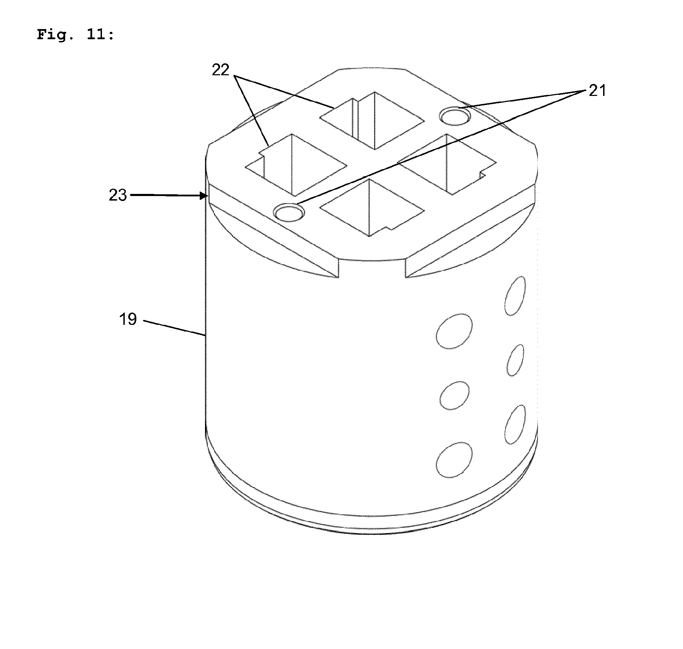

In Figur 11 ist der Mantel 19 der Kassette gemäss Figur 2 dargestellt.

Der Mantel 19 weist bei bestimmungsgemässem Gebrauch auf der dem Griff zugewandten Seite vier Öffnungen 22 zur Aufnahme der vier Schneideinrichtungen auf. Zudem sind zwei Ausrichtungsöffnungen 21 zum Eingreifen für die Mantelausrichtungseinrichtung vorgesehen.

Der Mantel 19 weist zudem auf der dem Griff zugewandten Seite einen Ausrichtungsabschnitt 23 zur Ausrichtung der Kassette in der Schablone. Die äussere Form des Mantels 19 im Bereich des Ausrichtungsabschnitts 23 ist im Wesentlichen komplementär zur Form der Schablonenöffnung.

## Patentansprüche

1. Werkzeug (1) zur insbesondere spanenden Bearbeitung eines Werkstücks, insbesondere einer Walze (2), wobei das Werkzeug (1) einen Werkzeugkörper (3) und eine Kassette (4) umfasst, und wobei zumindest eine Bearbeitungseinrichtung, insbesondere eine Schneideinrichtung (14), an und/oder in der Kassette (4) insbesondere lösbar befestigbar ist, **dadurch gekennzeichnet, dass** das Werkzeug (1) eine Positioniereinrichtung aufweist zur Ausrichtung der Kassette (4) im Werkzeugkörper (3) in einer vorbestimmten Position.

2. Werkzeug (1) nach Anspruch 1, **dadurch gekennzeichnet, dass** die Positioniereinrichtung einen am Werkzeugkörper (3) angeordneten Spalt (5) umfasst.

3. Werkzeug (1) nach Anspruch 2, **dadurch gekennzeichnet, dass** an der Kassette (4) ein Vorsprung (6) angeordnet ist zum Eingreifen in den Spalt (5).

4. Werkzeug (1) nach Anspruch 3, **dadurch gekennzeichnet, dass** der Vorsprung (6) lösbar mit der Kassette (4) verbindbar ist.

5. Werkzeug (1) nach Anspruch 3 oder 4, **dadurch gekennzeichnet, dass** der Vorsprung (6) an einer Schablone (7) angeordnet ist, wobei die Schablone (7) eine Schablonenöffnung (8) zur Aufnahme der Kassette (4) aufweist, wobei insbesondere zumindest abschnittsweise die äussere Form der Kassette (4) im Wesentlichen komplementär zur Form der Schablonenöffnung (8) ist.

6. Werkzeug (1) nach einem der Ansprüche 3 bis 5, **dadurch gekennzeichnet, dass** am und/oder im Spalt (5) eine Befestigungseinrichtung (9) zur Befestigung, insbesondere mittels Reibschluss, der Vorsprung (6) im Spalt (5) angeordnet ist.

7. Werkzeug (1) nach einem der Ansprüche 1 bis 6, **dadurch gekennzeichnet, dass** am und/oder im Werkzeugkörper (3) eine Kassettenbefestigung (17), insbesondere mittels Reibschluss, angeordnet ist.

8. Werkzeug (1) nach einem der Ansprüche 1 bis 7, **dadurch gekennzeichnet, dass** die Kassette (4) einen Griff (10) aufweist.

9. Werkzeug (1) nach einem der Ansprüche 1 bis 8, **dadurch gekennzeichnet, dass** die Bearbeitungseinrichtung zumindest zwei in Reihe angeordnete Schneideinrichtungen (14) umfasst.

10. Werkzeug (1) nach Anspruch 9, **dadurch gekennzeichnet, dass** die der Bearbeitungsrichtung zugewandte Schneideinrichtung (14) bezogen auf eine Längsachse (L) des Werkzeugs (1) einen ersten Abstand (a) vom Werkzeugkörper (3) kleiner als einen zweiten Abstand (c) der der Bearbeitungsrichtung abgewandten Schneideinrichtung (14) aufweist.

11. Werkzeug (1) nach einem der Ansprüche 1 bis 10, **dadurch gekennzeichnet, dass** die Bearbeitungseinrichtung zumindest zwei im Wesentlichen parallel zueinander angeordnete Schneideinrichtungen (14) umfasst, wobei insbesondere eine erste Schneideinrichtung (14) für eine erste Bearbeitungsrichtung angeordnet ist und eine zweite Schneideinrichtung (14) für eine der ersten Bearbeitungsrichtung im Wesentlichen entgegengesetzte Bearbeitungsrichtung.

12. Werkzeug (1), insbesondere nach einem der Ansprüche 1 bis 11, zur insbesondere spanenden Bearbeitung eines Werkstücks, insbesondere einer Walze (2), wobei das Werkzeug (1) einen Werkzeugkörper (3) umfasst zur Aufnahme von zwei im Wesentlichen parallel zueinander angeordneten Serien von zumindest zwei in Reihe angeordneten Schneideinrichtungen (14), wobei insbesondere ein erstes Paar (15) von Schneideinrichtungen (14) für eine erste Bearbeitungsrichtung angeordnet ist und ein zweites Paar (16) von Schneideinrichtungen (14) für eine der ersten Bearbeitungsrichtung im Wesentlichen entgegengesetzte Bearbeitungsrichtung.

13. Schablone (7) für ein Werkzeug (1) nach einem der der Ansprüche 1 bis 11, umfassend einen Vorsprung (6) zum Eingreifen in einen Spalt (5) eines Werkzeugkörpers (3), wobei die Schablone (7) eine Schablonenöffnung (8) zur Aufnahme einer Kassette (4) aufweist, und wobei insbesondere zumindest abschnittsweise die äussere Form der Kassette (4) im Wesentlichen komplementär zur Form der Schablonenöffnung (8) ist.

14. Kassette (4) für ein Werkzeug (1) nach einem der der Ansprüche 1 bis 11, umfassend zumindest eine Bearbeitungseinrichtung, insbesondere eine Schneideinrichtung (14), wobei die Bearbeitungseinrichtung an und/oder in der Kassette (4) insbesondere lösbar aufnehmbar ist, wobei an der Kassette (4) ein Vorsprung (6) anordenbar oder angeordnet ist zum Eingreifen in einen Spalt (5) eines Werkzeugkörpers (3).

15. Verfahren zum Riffeln einer Walze (2) mit einem Werkzeug (1), insbesondere gemäss einem der Ansprüche 1 bis 12, wobei das Werkzeug (1) einen Werkzeugkörper (3) und/oder eine Kassette (4) umfasst zur Aufnahme von zwei im Wesentlichen parallel zueinander angeordneten Paaren von zumindest zwei in Reihe angeordnete Schneideinrichtungen (14), wobei ein erstes Paar (15) von Schneideinrichtungen für eine erste Bearbeitungsrichtung angeordnet ist und ein zweites Paar (16) von Schneideinrichtungen für eine der ersten Bearbeitungsrichtung im Wesentlichen entgegengesetzte Bearbeitungsrichtung, umfassend die folgenden Schritte:
- Positionieren des ersten Paares (15) an der Walze (2);
- Rotieren der Walze (2) um die Walzenachse (W) in einer ersten Drehrichtung (b), insbesondere um einen Winkelabschnitt, und im Wesentlichen gleichzeitiges Bewegen des Werkzeugs (1), insbesondere mittels eines Linearantriebs (11), entlang der Walzenachse (W) in der ersten Bearbeitungsrichtung zum Herstellen eines Riffels (12) in der Walze;
- Positionieren des zweiten Paares (16) am und/oder im Riffel (12);
- Rotieren der Walze (2) um die Walzenachse (W) in einer zweiten Drehrichtung (b), insbesondere um einen negativen Winkelabschnitt, und im Wesentlichen gleichzeitiges Bewegen des Werkzeugs (1), insbesondere mittels des Linearantriebs (11), entlang der Walzenachse (W) in der zweiten Bearbeitungsrichtung entlang des Riffels (12).
